# EUROPEAN PATENT APPLICATION

(11) **EP 4 665 080 A1**
(43) Date of publication of application: **17.12.2025**
(21) Application number: 23921154.3
(22) Date of filing: 09.02.2023
(51) Int. Cl.: H04W 84/00, H04W 16/26, H04W 36/22, H04W 36/32, H04W 92/20

(54) **WIRELESS BASE STATION, WIRELESS RELAY DEVICE, MOBILE BODY, WIRELESS COMMUNICATION SYSTEM, WIRELESS COMMUNICATION METHOD, AND PROGRAM**

(71) Applicant: HONDA MOTOR CO., LTD., Tokyo 105-8404 (JP)
(72) Inventor: OTAKA Masaru, Tokyo 107-8556 (JP); OI Yusuke, Tokyo 107-8556 (JP)
(74) Representative: Weickmann & Weickmann PartmbB
(86) International application number: PCT/JP2023/004444
(87) International publication number: WO 2024/166323

(57) **Abstract**

A wireless relay device for relaying communication between a terminal device and a base station includes a communication unit which wirelessly communicates with one or more terminal devices, transmits, to another wireless relay device, load information indicating a communication load of the wireless relay device, and receives load information indicating a communication load of the another wireless relay device, and a control unit which performs, based on the communication load of the wireless relay device and the communication load of the another wireless relay device, control of switching communication connection destinations of some terminal devices of a plurality of terminal devices communicably connected to the wireless relay device, to the another wireless relay device.

## Description

### BACKGROUND

### 1. TECHNICAL FIELD

The present invention relates to a wireless base station, a wireless relay device, a mobile body, a wireless communication system, a wireless communication method, and a program.

### 2. RELATED ART

Patent Documents 1 to 5 describes techniques related to mobile body communication.

### Related Art Documents

### Patent documents

Patent Document 1: Japanese Patent Application Publication No. 2004-221680
Patent Document 2: Japanese Patent No. 6013984
Patent Document 3: Japanese Patent No. 5440117
Patent Document 4: Japanese Patent No. 5321319
Patent Document 5: Japanese Patent No. 6239572

### TECHNICAL PROBLEM

Meanwhile, mobile communication provided by a mobile body is limited in its communication capacity, and for this reason, there is an issue that overload easily occurs. The present application solves the above-described issue, and therefore, can improve stability of communication in a mobile body. Thus, the present application can further improve traffic safety, and contribute to development of a sustainable transport system.

### GENERAL DISCLOSURE

A first aspect of the present invention provides a wireless relay device. The wireless relay device relays communication between a terminal device and a base station. The wireless relay device includes a communication unit which wirelessly communicates with one or more terminal devices, transmits, to another wireless relay device, load information indicating a communication load of the wireless relay device, and receives load information indicating a communication load of the another wireless relay device. The wireless relay device includes a control unit which performs, based on the communication load of the wireless relay device and the communication load of the another wireless relay device, control of switching communication connection destinations of some terminal devices of a plurality of terminal devices communicably connected to the wireless relay device, to the another wireless relay device.

In the above-described wireless relay device, when the communication load of the wireless relay device exceeds a predetermined value and the communication load of the another wireless relay device is less than a predetermined value, the control unit may perform control of switching the communication connection destinations of the some terminal devices of the plurality of terminal devices to the another wireless relay device.

In any of the above-described wireless relay devices, the control unit may decide, based on the communication load of the wireless relay device and the communication load of the another wireless relay device, a number of terminal devices whose communication connection destinations are to be switched to the another wireless relay device, among the plurality of terminal devices.

In any of the above-described wireless relay devices, the communication unit may receive information indicating a location of the another wireless relay device. The control unit may perform, based on the communication load of the wireless relay device, the communication load of the another wireless relay device, a location of the wireless relay device, and the location of the another wireless relay device, control of switching the communication connection destinations of the some terminal devices of the plurality of terminal devices, to the another wireless relay device.

In any of the above-described wireless relay devices, the communication unit may receive information indicating a history of a location of the another wireless relay device in a past. The control unit may perform, based on the communication load of the wireless relay device, the communication load of the another wireless relay device, a history of a location of the wireless relay device in a past, and the history of the location of the another wireless relay device, control of switching the communication connection destinations of the some terminal devices of the plurality of terminal devices to the another wireless relay device.

In a second aspect, a mobile body is provided. The mobile body includes any of the above-described wireless relay devices.

In a third aspect, a program is provided. The program causes a computer to function as any of the above-described wireless relay devices.

In a fourth aspect, a wireless base station is provided. The wireless base station communicates with a terminal device via a wireless relay device. The wireless base station includes a communication unit which receives load information indicating a first communication load in a first wireless relay device, and load information indicating a second communication load in a second wireless relay device. The wireless base station includes a control unit which performs, based on the first communication load and the second communication load, control of switching communication connection destinations of some terminal devices of a plurality of terminal devices communicably connected to the first wireless relay device, to the second wireless relay device.

In the above-described wireless base station, the communication unit may further receive, from the first wireless relay device, first quality information indicating a quality of a radio wave of the second wireless relay device, which is measured in the first wireless relay device, and receives, from the second wireless relay device, second quality information indicating a quality of a radio wave of the first wireless relay device, which is measured in the second wireless relay device. The control unit may perform, further based on the first quality information and the second quality information, control of switching the communication connection destinations of the some terminal devices of the plurality of terminal devices connected to the first wireless relay device, to the second wireless relay device.

In any of the above-described wireless base stations, the communication unit may further receive first location information indicating a location of the first wireless relay device and second location information indicating a location of the second wireless relay device. The control unit may perform, further based on the first location information and the second location information, control of switching the communication connection destinations of the some terminal devices of the plurality of terminal devices connected to the first wireless relay device, to the second wireless relay device.

In any of the above-described wireless base stations, the communication unit may further receive first location history information indicating a history of a location of the first wireless relay device in a past and second location history information indicating a history of a location of the second wireless relay device in a past. The control unit may perform, further based on the first location history information and the second location history information, control of switching the communication connection destinations of the some terminal devices of the plurality of terminal devices connected to the first wireless relay device, to the second wireless relay device.

In a fifth aspect, a wireless communication system is provided. The wireless communication system includes any of the above-described wireless base stations, and the first wireless relay device and the second wireless relay device.

In a sixth aspect, a program is provided. The program causes a computer to function as any of the above-described wireless base stations.

In a seventh aspect, a wireless communication method is provided. The wireless communication method is performed by a wireless relay device which relays communication between a terminal device and a base station. The wireless communication method includes wirelessly communicating with one or more terminal devices, transmitting, to another wireless relay device, load information indicating a communication load of the wireless relay device, and receiving load information indicating a communication load of the another wireless relay device. The wireless communication method includes performing, based on the communication load of the wireless relay device and the communication load of the another wireless relay device, control of switching communication connection destinations of some terminal devices of a plurality of terminal devices communicably connected to the wireless relay device, to the another wireless relay device.

In an eighth aspect, a wireless communication method is provided. The wireless communication method is performed by a wireless base station which communicates with a terminal device via a wireless relay device. The wireless communication method includes receiving load information indicating a first communication load in a first wireless relay device and load information indicating a second communication load in a second wireless relay device. The wireless communication method includes performing, based on the first communication load and the second communication load, control of switching communication connection destinations of some terminal devices of a plurality of terminal devices communicably connected to the first wireless relay device, to the second wireless relay device.

The summary clause does not necessarily describe all necessary features of the embodiments of the present invention. In addition, the present invention may also be a sub-combination of the features described above.

### BRIEF DESCRIPTION OF THE DRAWINGS

Fig. 1 schematically illustrates a configuration of a wireless communication system 5 according to one embodiment.
Fig. 2 illustrates an example of a system configuration of a wireless relay device 110.
Fig. 3 illustrates an example of a system configuration of a wireless base station 120.
Fig. 4 illustrates a connection state of a terminal device 140 when a mobile body 100a is located in a cell 180a and a mobile body 100b is located in a cell 180b.
Fig. 5 illustrates a state in which communication connection destinations of two terminal devices 140 are switched to a wireless relay device 110b in response to the mobile body 100a approaching the mobile body 100b.
Fig. 6 illustrates a connection state of the terminal device 140 when the mobile body 100a is located in a cell 180c of a wireless base station 120c after further movement.
Fig. 7 illustrates an example of a sequence related to a wireless communication method performed in the wireless communication system 5.
Fig. 8 illustrates an example of the sequence related to the wireless communication method performed in the wireless communication system 5.
Fig. 9 illustrates an example of a computer 2000 in which a plurality of embodiments of the present invention may be entirely or partially embodied.

### DESCRIPTION OF EXEMPLARY EMBODIMENTS

Hereinafter, the present invention will be described through embodiments of the invention, but the following embodiments do not limit the invention according to the claims. In addition, not all of the combinations of features described in the embodiments are essential to the solution of the invention.

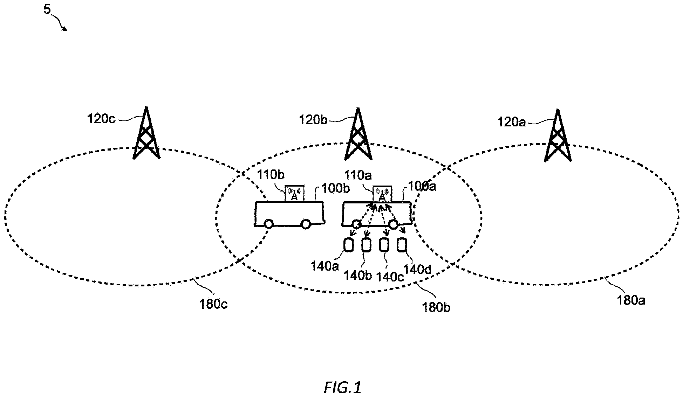

Fig. 1 schematically illustrates a configuration of a wireless communication system 5 according to one embodiment. The wireless communication system 5 includes a wireless base station 120a, a wireless base station 120b, and a wireless base station 120c, a wireless relay device 110a and a wireless relay device 110b, a mobile body 100a and a mobile body 100b, and a terminal device 140a, a terminal device 140b, a terminal device 140c, and a terminal device 140d.

In the present embodiment, the wireless base station 120a, the wireless base station 120b, and the wireless base station 120c may be collectively referred to as a "wireless base station 120" without a last character of a sign. Similarly, the wireless relay device 110a and the wireless relay device 110b may be collectively referred to as a "wireless relay device 110" without a last character of a sign. Similarly, the mobile body 100a and the mobile body 100b may be collectively referred to as a "mobile body 100" without a last character of a sign. Similarly, the terminal device 140a, the terminal device 140b, the terminal device 140c, and the terminal device 140d may be collectively referred to as a "terminal device 140" without a last character of a sign.

The wireless base station 120 is a mobile communication base station corresponding to one or more mobile communication methods. Similarly, the wireless relay device 110 and the terminal device 140 are wireless communication devices corresponding to one or more mobile communication methods. In the present embodiment, the mobile communication methods corresponding to the wireless base station 120, the wireless relay device 110, and the terminal device 140 may be, for example, used in a mobile communication system such as a fourth-generation mobile communication system (4G) or a fifth-generation mobile communication system (5G), for example.

The wireless base station 120 is fixed at a particular location. Each of the wireless base stations 120 forms a cell, and by forming the cell, wirelessly communicates with the wireless relay device 110 and the terminal device 140. For example, a cell 180a is formed by the wireless base station 120a, a cell 180b is formed by the wireless base station 120b, and a cell 180c is formed by the wireless base station 120c. In the present embodiment, the cell 180a, the cell 180b, and the cell 180c may be collectively referred to as a "cell 180" without a last character of a sign.

The wireless relay device 110 has a functionality of providing a service as a wireless base station to the terminal device 140, and has a functionality of receiving a service as a terminal device from the wireless base station 120. The wireless relay device 110 relays communication between the terminal device 140 and the wireless base station 120. The terminal device 140 can access a core network via the wireless base station 120. Even when the terminal device 140 cannot directly wirelessly communicate with the wireless base station 120, the terminal device 140 may be able to access the core network via the wireless relay device 110 and the wireless base station 120.

The mobile body 100 is movable equipment. The mobile body 100 is, for example, a vehicle such as an automobile such as a bus or a train. The vehicle is an example of transport equipment. The mobile body 100 may be various aircrafts including an unmanned aircraft, an artificial satellite, a ship, and the like. The mobile body 100a includes the wireless relay device 110a. The mobile body 100b includes the wireless relay device 110b. Accordingly, the wireless relay device 110a is movable together with the mobile body 100a, and the wireless relay device 110b is movable together with the mobile body 100b.

When the mobile body 100a is located in the cell 180b of the wireless base station 120b, the wireless relay device 110a relays communication between each of the terminal device 140a, the terminal device 140b, the terminal device 140c, and the terminal device 140d carried by users riding the mobile body 100a and the wireless base station 120b.

Fig. 1 illustrates a status in which four terminal devices 140 are communicably connected to the wireless relay device 110a and the terminal devices 140 are not communicably connected to the wireless relay device 110b. Accordingly, under the status of Fig. 1, a communication load of the wireless relay device 110a is higher than a communication load of the wireless relay device 110b. Meanwhile, since the mobile body 100a and the mobile body 100b are relatively close to each other, the terminal device 140 which is carried by the user of the wireless relay device 110a is at a location at which the terminal device 140 is wirelessly communicable with the wireless relay device 110b, and therefore, a communication connection destination of the terminal device 140 can be switched to the wireless relay device 110b. Therefore, the wireless relay device 110a, the wireless relay device 110b, and the wireless base station 120b cooperate to switch the communication connection destinations of the terminal device 140a and terminal device 140b, which are two of the four terminal devices 140 communicably connected to the wireless relay device 110a, to the wireless relay device 110b.

As an example, the wireless relay device 110a and the wireless relay device 110b exchange the communication loads with one another, and based on the communication loads of one another, the wireless relay device 110a decides to switch the communication connection destinations of the terminal device 140a and the terminal device 140b to the wireless relay device 110b. As another example, the wireless relay device 110a and the wireless relay device 110b transmit each communication load to the wireless base station 120, and the wireless base station 120b decides to switch the communication connection destinations of the terminal device 140a and the terminal device 140b to the wireless relay device 110b. With this configuration, load balancing can be performed between the plurality of wireless relay devices 110.

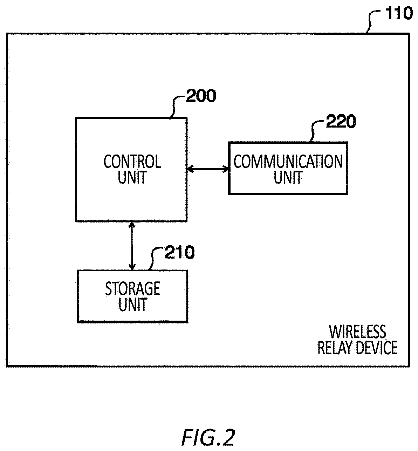

Fig. 2 illustrates an example of a system configuration of the wireless relay device 110. The wireless relay device 110 relays communication between the wireless base station 120 and the terminal device 140. The wireless relay device 110 includes a control unit 200, a storage unit 210, and a communication unit 220.

The control unit 200 controls the entire wireless relay device 110. The communication unit 220 has a role in wireless communication with the wireless base station 120 and the terminal device 140. The control unit 200 is realized by a computing device including a processor. The storage unit 210 is realized including a non-volatile storage medium. The control unit 200 performs processing by using information stored in the storage unit 210. The control unit 200 may be realized by a microcomputer including a CPU, a ROM, a RAM, an I/O, a bus, and the like. The wireless relay device 110 may be realized by a computer. The wireless relay device 110 may be realized by a single computer. The wireless relay device 110 may be realized by a plurality of computers. The functionality of the wireless relay device 110 may be realized by a virtual system realized by using a virtualization technology.

The communication unit 220 wirelessly communicates with one or more terminal devices 140. The communication unit 220 transmits load information indicating the communication load of the wireless relay device 110 to another wireless relay device 110, and receives load information indicating the communication load of the another wireless relay device 110. The control unit 200 performs, based on the communication load of the wireless relay device 110 and the communication load of the another wireless relay device 110, control of switching the communication connection destinations of some terminal devices 140 of the plurality of terminal devices 140 communicably connected to the wireless relay device 110 to the another wireless relay device 110.

When the communication load of the wireless relay device 110 exceeds a predetermined value and the communication load of the another wireless relay device 110 is less than a predetermined value, the control unit 200 may perform the control of switching the communication connection destinations of some terminal devices 140 of the plurality of terminal devices 140 to the another wireless relay device 110.

The control unit 200 may decide, based on the communication load of the wireless relay device 110 and the communication load of the another wireless relay device 110, a number of terminal devices 140 whose communication connection destinations are to be switched to the another wireless relay device 110, among the plurality of terminal devices 140.

The communication unit 220 receives information indicating a location of the another wireless relay device 110. The control unit 200 performs, based on the communication load of the wireless relay device 110, the communication load of the another wireless relay device 110, a location of the wireless relay device 110, and the location of the another wireless relay device 110, the control of switching the communication connection destinations of some terminal devices 140 of the plurality of terminal devices 140 to the another wireless relay device 110. The "information indicating the location of the wireless relay device 110" may indicate a current location of the wireless relay device 110. The information indicating the current location of the wireless relay device 110 may indicate a geographic location of the wireless relay device 110, for example, latitude and longitude of the wireless relay device 110.

The communication unit 220 may receive information indicating a history of the location of another wireless relay device 110 in a past. The control unit 200 may perform, based on the communication load of the wireless relay device 110, the communication load of the another wireless relay device 110, the history of the location of the wireless relay device 110 in the past, and the history of the location of the another wireless relay device 110, the control of switching the communication connection destinations of some terminal devices 140 of the plurality of terminal devices 140 to the another wireless relay device 110.

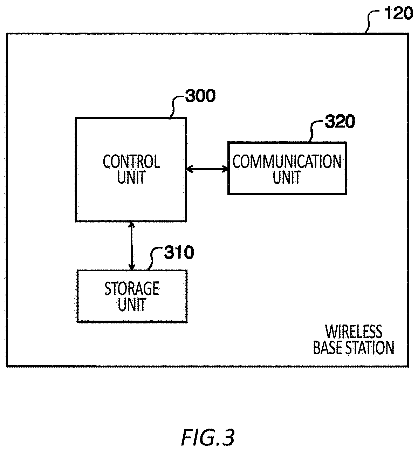

Fig. 3 illustrates an example of a system configuration of the wireless base station 120. The wireless base station 120 communicates with the terminal device 140 via the wireless relay device 110. The wireless base station 120 includes a control unit 300, a storage unit 310, and a communication unit 320.

The control unit 300 controls the entire wireless base station 120. The communication unit 320 has a role in wireless communication with the wireless relay device 110 and the terminal device 140. The control unit 300 is realized by a computing device including a processor. The storage unit 310 is realized including a non-volatile storage medium.

The control unit 300 performs processing by using information stored in the storage unit 310. The control unit 300 may be realized by a microcomputer including a CPU, a ROM, a RAM, an I/O, a bus, and the like. The wireless base station 120 may be realized by a computer. The wireless base station 120 may be realized by a single computer. The wireless base station 120 may be realized by a plurality of computers. The functionality of the wireless base station 120 may be realized by a virtual system realized by using a virtualization technology.

The communication unit 320 receives load information indicating a first communication load in a first wireless relay device 110 and load information indicating a second communication load in a second wireless relay device 110. The control unit 300 performs, based on the first communication load and the second communication load, control of switching communication connection destinations of some terminal devices 140 of a plurality of terminal devices 140 communicably connected to the first wireless relay device 110 to the second wireless relay device 110.

Further, the communication unit 320 may receive, from the first wireless relay device 110, first quality information indicating a quality of a radio wave of the second wireless relay device 110, which is measured in the first wireless relay device 110, and receive, from the second wireless relay device 110, second quality information indicating a quality of a radio wave of the first wireless relay device 110, which is measured in the second wireless relay device 110. The control unit 300 may perform, further based on the first quality information and the second quality information, the control of switching the communication connection destinations of some terminal devices 140 of the plurality of terminal devices 140 connected to the first wireless relay device 110 to the second wireless relay device 110.

Further, the communication unit 320 may receive first location information indicating a location of the first wireless relay device 110 and second location information indicating a location of the second wireless relay device 110. The control unit 300 may perform, further based on the first location information and the second location information, the control of switching the communication connection destinations of some terminal devices 140 of the plurality of terminal devices 140 connected to the first wireless relay device 110 to the second wireless relay device 110. As described above, the "information indicating the location of the wireless relay device 110" may indicate the current location of the wireless relay device 110. The information indicating the current location of the wireless relay device 110 may indicate a geographic location of the wireless relay device 110, for example, latitude and longitude of the wireless relay device 110.

Further, the communication unit 320 may receive first location history information indicating a history of the location of the first wireless relay device 110 in the past and second location history information indicating a history of the location of the second wireless relay device 110 in the past. The control unit 300 may perform, further based on the first location history information and the second location history information, the control of switching the communication connection destinations of some terminal devices 140 of the plurality of terminal devices 140 connected to the first wireless relay device 110 to the second wireless relay device 110.

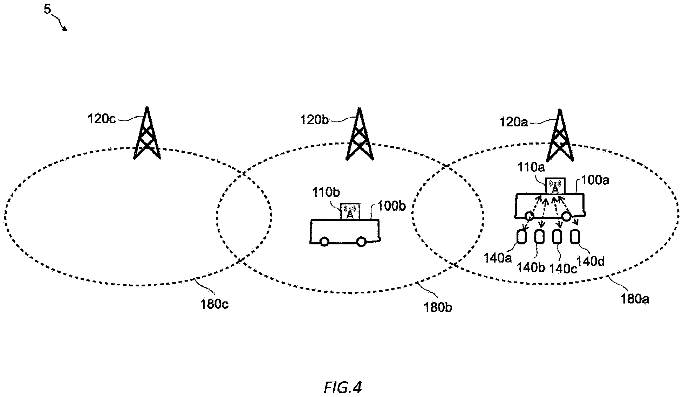

Fig. 4 illustrates a connection state of the terminal device 140 when the mobile body 100a is located in the cell 180a and the mobile body 100b is located in the cell 180b. All the terminal devices 140 in the mobile body 100a are communicably connected to the wireless relay device 110a, and are connected to the core network via the wireless relay device 110a and the wireless base station 120a. In the status of Fig. 4, since the terminal device 140 is at a location away from the wireless relay device 110b, the communication connection destination of the terminal device 140 cannot be switched to the wireless relay device 110b. Therefore, the load balancing by the wireless relay device 110a and the wireless relay device 110b is not performed.

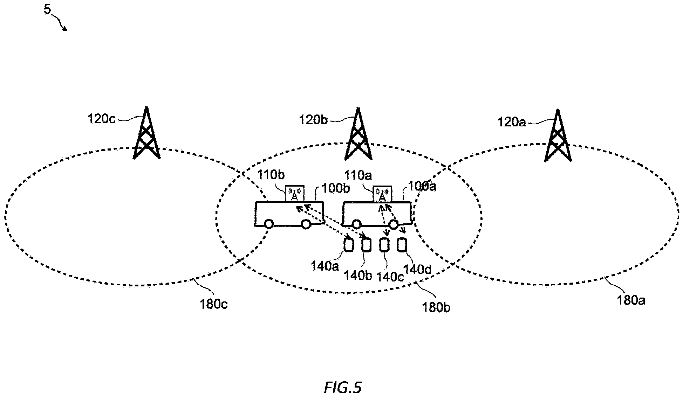

Fig. 5 illustrates a state in which the communication connection destinations of the two terminal devices 140 are switched to the wireless relay device 110b in response to the mobile body 100a approaching the mobile body 100b. As described with reference to Fig. 1 and the like, based on the communication load of the wireless relay device 110a and the communication load of the wireless relay device 110b, the communication connection destinations of the terminal device 140a and the terminal device 140b of the four terminal devices 140 communicably connected to the wireless relay device 110a are switched to the wireless relay device 110b. The terminal device 140a and the terminal device 140b are connected to the core network via the wireless relay device 110b, and the terminal device 140c and the terminal device 140d are connected to the core network via the wireless relay device 110a. With this configuration, the load balancing by the wireless relay device 110a and the wireless relay device 110b is performed.

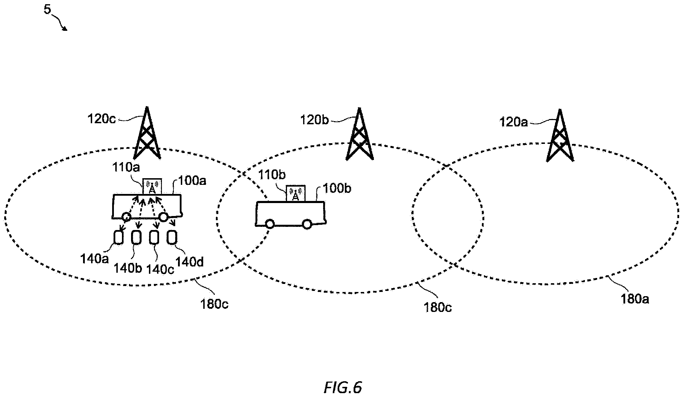

Fig. 6 illustrates a connection state of the terminal device 140 when the mobile body 100a is located in the cell 180c of the wireless base station 120c after further movement. As the mobile body 100a moves away from the mobile body 100b, a quality of communication of the terminal device 140 with the wireless relay device 110b is lowered. Accordingly, the connection destinations of the terminal device 140a and the terminal device 140b communicably connected to the wireless relay device 110b are switched to the wireless relay device 110a. This can prevent interruption of communication of the terminal device 140 with the outside.

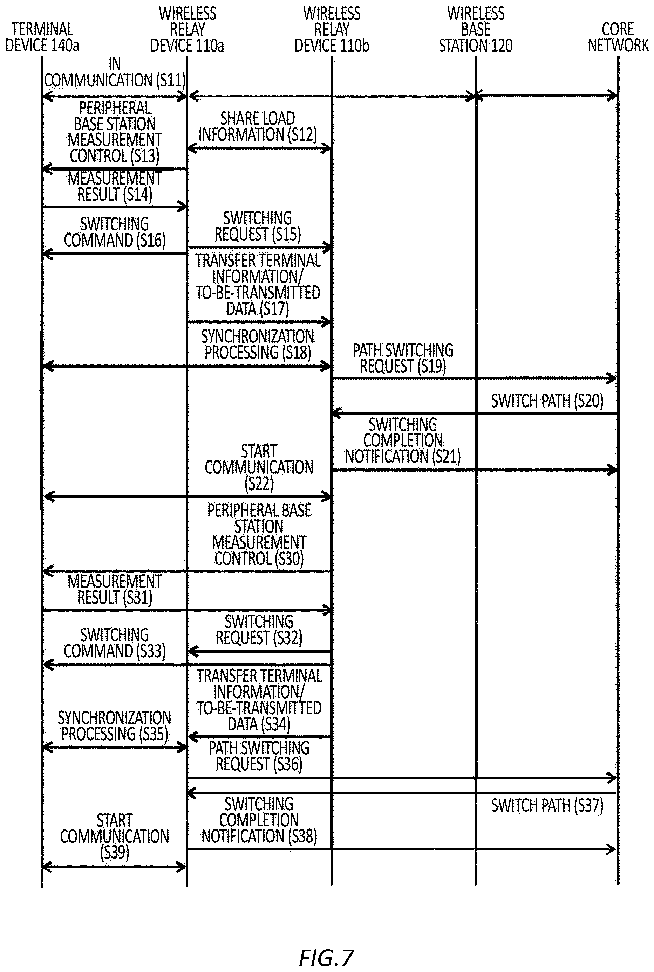

Fig. 7 illustrates an example of a sequence related to a wireless communication method performed in the wireless communication system 5. Fig. 7 mainly illustrates a sequence of a method of switching the communication connection destination of the terminal device 140 mainly by the wireless relay device 110. Main processing performed according to the sequence of Fig. 7 from the connection state of Fig. 4 until the connection state of Fig. 6 will be described. Fig. 7 only illustrates the terminal device 140a of the terminal device 140a and the terminal device 140b as switching targets, but the processing of the terminal device 140b is also similar to the processing of the terminal device 140a.

It is assumed that upon initiation of the present sequence, all the terminal devices 140 are connected to the wireless relay device 110a, for example, as illustrated in Fig. 4. That is, the terminal device 140a is connected to and in communication with the wireless relay device 110a (S11), and the terminal device 140a is connected to the wireless base station 120 and the core network via the wireless relay device 110a.

When the wireless relay device 110a approaches the wireless relay device 110b, the wireless relay device 110a and the wireless relay device 110b exchange, in S12, the load information indicating the communication loads of one another. The control units 200 of the wireless relay device 110a and the wireless relay device 110b determine, according to a predetermined condition, whether or not the connection destinations of some terminal devices 140 connected to the wireless relay device 110a can be switched to the wireless relay device 110b.

As an example, when a difference between a communication load rate of the wireless relay device 110a and a communication load rate of the wireless relay device 110b is larger than a predetermined value, the control unit 200 may determine that the connection destinations of some terminal devices 140 can be switched to the wireless relay device 110b. When the communication load rate of the wireless relay device 110a is higher than a predetermined first threshold and the communication load rate of the wireless relay device 110b is lower than a second threshold lower than the first threshold, the control unit 200 may determine that the connection destinations of some terminal devices 140 can be switched to the wireless relay device 110b.

Further, the control unit 200 may decide, based on the communication load rate of the wireless relay device 110a and the communication load rate of the wireless relay device 110b, the number N of terminal devices 140 whose connection destinations are to be switched to the wireless relay device 110b. The control unit 200 may increase N as the difference between the communication load rate of the wireless relay device 110a and the communication load rate of the wireless relay device 110b increases. It is assumed that in the present embodiment, the connection destinations of the terminal device 140a and the terminal device 140b are determined to be switched to the wireless relay device 110b.

When it is determined that the connection destinations of some terminal devices 140 can be switched to the wireless relay device 110b, the wireless relay device 110a transmits a peripheral base station measurement control instruction to the terminal device 140 (S13). When receiving the peripheral base station measurement control instruction, the terminal device 140 acquires a reception state of a signal such as reporting information transmitted from a peripheral base station. For example, the terminal device 140 may acquire RSRP and RSRQ of the signal transmitted form the peripheral base station.

The terminal device 140 transmits a measurement result indicating a radio wave reception state to the wireless relay device 110a (S14). When the control unit 200 of the wireless relay device 110a determines, based on the received measurement result, that the communication connection destination of the terminal device 140 can be switched to the wireless relay device 110b, the communication unit 220 of the wireless relay device 110a transmits a switching request to the wireless relay device 110b (S15), and transmits a switching command for switching the communication connection destination to the terminal device 140a and the terminal device 140b (S16). Further, the communication unit 220 of the wireless relay device 110a transfers, to the wireless relay device 110b, to-be-transmitted data together with identification information on the terminal device 140a and the terminal device 140b as communication connection destination switching targets (S17).

The control unit 200 of the wireless relay device 110b performs line synchronization processing between the terminal device 140a and the terminal device 140b (S18), and transmits a path switching request to the core network (S19). When a path is switched from the wireless relay device 110a to the wireless relay device 110b by the core network (S20), the communication unit 220 of the wireless relay device 110b transmits a switching completion notification to the core network (S21). In this manner, the communication connection destinations of the terminal device 140a and the terminal device 140b are switched to the wireless relay device 110b, and communication between the terminal device 140a and the terminal device 140b and the wireless relay device 110b is started (S22). In this manner, as illustrated in Fig. 5, the terminal device 140a and the terminal device 140b are connected to the wireless relay device 110b.

In S30, the wireless relay device 110b transmits a peripheral base station measurement control instruction to the terminal device 140a and the terminal device 140b. The wireless relay device 110b may regularly transmit the peripheral base station measurement control instruction. In response to reception of the peripheral base station measurement instruction, the terminal device 140a and the terminal device 140b measure a reception state of a signal such as reporting information transmitted from a peripheral base station. For example, the terminal device 140a and the terminal device 140b may calculate RSRP and RSRQ of the signal transmitted from the peripheral base station.

The terminal device 140 transmits a measurement result indicating a radio wave reception state to the wireless relay device 110b (S31). When the control unit 200 of the wireless relay device 110b determines, based on the received measurement result, that the communication connection destination of the terminal device 140 needs to be switched to the wireless relay device 110a, the communication unit 220 of the wireless relay device 110b transmits a switching request to the wireless relay device 110a (S32), and transmits a switching command for switching the communication connection destination to the terminal device 140a and the terminal device 140b (S33). Further, the communication unit 220 of the wireless relay device 110b transfers, to the wireless relay device 110a, to-be-transmitted data together with identification information on the terminal device 140a and the terminal device 140b as communication connection destination switching targets (S34).

The control unit 200 of the wireless relay device 110a performs line synchronization processing between the terminal device 140a and the terminal device 140b (S35), and transmits a path switching request to the core network (S36). When a path is switched from the wireless relay device 110b to the wireless relay device 110a by the core network (S37), the communication unit 220 of the wireless relay device 110a transmits a switching completion notification to the core network (S38). In this manner, the communication connection destinations of the terminal device 140a and the terminal device 140b are switched to the wireless relay device 110a, and communication between the terminal device 140a and the terminal device 140b and the wireless relay device 110a is resumed (S39).

In the sequence illustrated in Fig. 7, when the wireless relay device 110a determines whether or not the connection destinations of some terminal devices 140 can be switched to another wireless relay device 110b, the current location of the wireless relay device 110a and the current location of the wireless relay device 110b may be further taken into consideration. For example, by using, as a requirement, a distance between the current location of the wireless relay device 110a and the current location of the wireless relay device 110b being shorter than a predetermined length, it may be determined whether or not the connection destinations of some terminal devices 140 can be switched to the another wireless relay device 110b. When the wireless relay device 110a determines whether or not the connection destinations of some terminal devices 140 can be switched to the another wireless relay device 110b, the history of the location of each of the wireless relay device 110a and the wireless relay device 110b in the past may be further taken into consideration. For example, by using, as a requirement, the degree of coincidence between a movement direction of the wireless relay device 110a and a movement direction of the wireless relay device 110b, which is calculated from the history of the location of the wireless relay device 110a and the history of the location of the wireless relay device 110b, being higher than a predetermined value, it may be determined whether or not the connection destinations of some terminal devices 140 can be switched to the another wireless relay device 110b. The wireless relay device 110a and the wireless relay device 110b may exchange the location information with one another in S12.

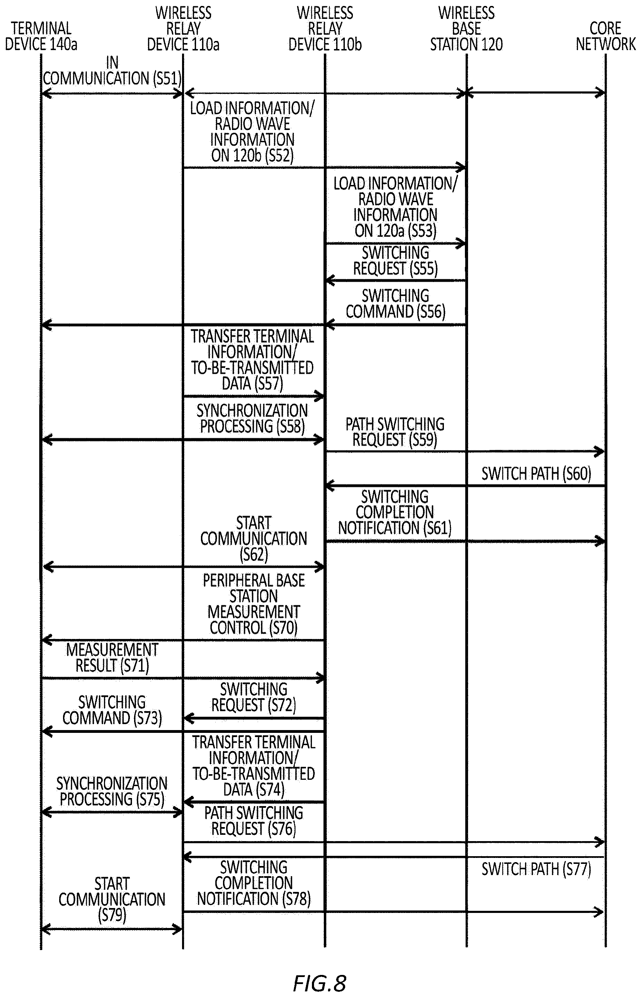

Fig. 8 illustrates an example of the sequence related to the wireless communication method performed in the wireless communication system 5. Fig. 8 mainly illustrates a sequence of a method of switching the communication connection destination of the terminal device 140 mainly by the wireless base station 120. Main processing performed according to the sequence of Fig. 8 from the connection state of Fig. 4 until the connection state of Fig. 6 will be described similarly to the description of Fig. 7. Similarly to Fig. 7, Fig. 8 only illustrates the terminal device 140a of the terminal device 140a and the terminal device 140b as switching targets, but the processing of the terminal device 140b is also similar to the processing of the terminal device 140a.

It is assumed that upon initiation of the present sequence, all the terminal devices 140 are connected to the wireless relay device 110a, for example, as illustrated in Fig. 4. That is, the terminal device 140a is connected to and in communication with the wireless relay device 110a (S51), and the terminal device 140a is connected to the wireless base station 120 and the core network via the wireless relay device 110a.

When the wireless relay device 110a approaches the wireless relay device 110b, the wireless relay device 110a transmits, to the wireless base station 120, load information indicating the communication load in the wireless relay device 110a and radio wave information from a peripheral base station (S52), and the wireless relay device 110b transmits, to the wireless base station 120, load information indicating the communication load in the wireless relay device 110b and radio wave information from the wireless relay device 110b (S53). The control unit 300 of the wireless base station 120 decides, based on the received information, the terminal device 140 to be switched to the wireless relay device 110b among the terminal devices 140 connected to the wireless relay device 110a. The radio wave information from the wireless relay device 110b may be transmitted from the wireless relay device 110b, and indicate an intensity and/or quality of a radio wave received by the wireless relay device 110a. Radio wave information from the wireless relay device 110a may be transmitted from the wireless relay device 110a, and indicate an intensity and/or quality of a radio wave received by the wireless relay device 110b. The radio wave information may include, for example, RSRP and RSRQ.

As an example, when the difference between the communication load rate of the wireless relay device 110a and the communication load rate of the wireless relay device 110b is larger than a predetermined value, the control unit 300 may determine that the connection destinations of some terminal devices 140 can be switched to the wireless relay device 110b. When the communication load rate of the wireless relay device 110a is higher than a predetermined first threshold and the communication load rate of the wireless relay device 110b is lower than a second threshold lower than the first threshold, the control unit 300 may determine that the connection destinations of some terminal devices 140 can be switched to the wireless relay device 110b.

As an example, at least on condition that the intensity and/or quality of the radio wave from the wireless relay device 110b, which is measured in the wireless relay device 110a, is higher than a predetermined reference value and the intensity and/or quality of the radio wave from the wireless relay device 110a, which is measured in the wireless relay device 110b, is higher than a predetermined reference value, the control unit 300 may determine that the connection destinations of some terminal devices 140 can be switched to the wireless relay device 110b.

Further, the control unit 300 may decide, based on the communication load rate of the wireless relay device 110a and the communication load rate of the wireless relay device 110b, the number N of terminal devices 140 whose connection destinations are to be switched to the wireless relay device 110b. The control unit 300 may increase N as the difference between the communication load rate of the wireless relay device 110a and the communication load rate of the wireless relay device 110b increases. It is assumed that in the present embodiment, the communication connection destinations of the terminal device 140a and the terminal device 140b are determined to be switched to the wireless relay device 110b.

The communication unit 320 of the wireless base station 120 transmits a switching request to the wireless relay device 110b as a communication connection switching destination (S55), and transmits a switching command for switching the communication connection destination to the terminal device 140a and the terminal device 140b, and the wireless relay device 110a (S56). When receiving the switching command, the communication unit 220 of the wireless relay device 110a transfers, to the wireless relay device 110b, to-be-transmitted data together with identification information on the terminal device 140a and the terminal device 140b as communication connection destination switching targets (S57).

The control unit 200 of the wireless relay device 110b performs line synchronization processing between the terminal device 140a and the terminal device 140b (S58), and transmits a path switching request to the core network (S59). When a path is switched from the wireless relay device 110a to the wireless relay device 110b by the core network (S60), the communication unit 220 of the wireless relay device 110b transmits a switching completion notification to the core network (S61). In this manner, the communication connection destinations of the terminal device 140a and the terminal device 140b are switched to the wireless relay device 110b, and communication between the terminal device 140a and the terminal device 140b and the wireless relay device 110b is started (S62). In this manner, as illustrated in Fig. 5, the terminal device 140a and the terminal device 140b are connected to the wireless relay device 110b.

Since the processing of Fig. 8 after S70 is similar to the processing of Fig. 7 after S30, the description will be omitted.

In the sequence illustrated in Fig. 8, when the wireless base station 120 determines whether or not the connection destinations of some terminal devices 140 can be switched to another wireless relay device 110b, the current location information of the wireless relay device 110a and the current location of the wireless relay device 110b may be further taken into consideration. For example, by using, as a requirement, a distance between the current location of the wireless relay device 110a and the current location of the wireless relay device 110b being shorter than a predetermined length, it may be determined whether or not the connection destinations of some terminal devices 140 can be switched to the another wireless relay device 110b. When the wireless base station 120 determines whether or not the connection destinations of some terminal devices 140 can be switched to the another wireless relay device 110b, the history of the location of each of the wireless relay device 110a and the wireless relay device 110b in the past may be further taken into consideration. For example, by using, as a requirement, the degree of coincidence between a movement direction of the wireless relay device 110a and a movement direction of the wireless relay device 110b, which is calculated from the history of the location of the wireless relay device 110a and the history of the location of the wireless relay device 110b, being higher than a predetermined value, it may be determined whether or not the connection destinations of some terminal devices 140 can be switched to the another wireless relay device 110b. The location information on the wireless relay device 110a and the wireless relay device 110b may be transmitted to the wireless base station 120 in S52 and S53.

According to the wireless communication system 5 described above, the communication connection destinations of the terminal device 140a and the terminal device 140b can be switched to the wireless relay device 110b based on the communication load in the wireless relay device 110a. With this configuration, the load balancing between the plurality of wireless relay device 110 can be performed. Accordingly, stability of communication by the wireless relay device 110 can be improved, and therefore, traffic safety of the mobile body 100 can be enhanced.

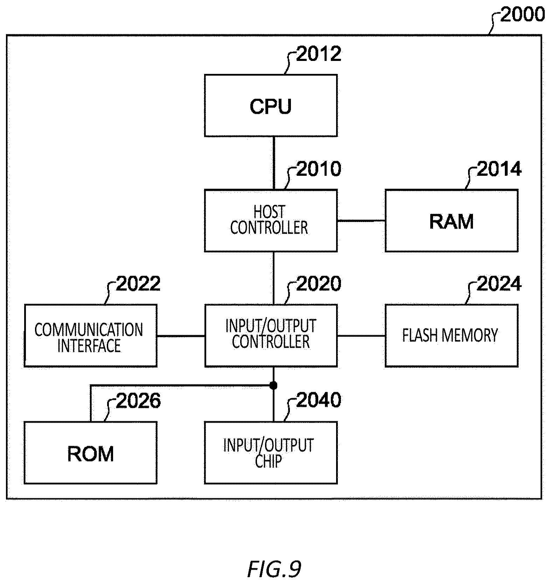

Fig. 9 illustrates an example of a computer 2000 in which a plurality of embodiments of the present invention can be entirely or partially embodied. A program installed in the computer 2000 can cause the computer 2000 to function as a system or each unit of a system according to an embodiment, or as various devices such as a wireless base station and a wireless relay device or each unit of the devices, to perform an operation associated with the system or each unit of the system, or the devices or each unit of the devices, and/or to perform a process or a step of the process according to an embodiment.

Such a program may be performed by a CPU 2012 in order to cause the computer 2000 to perform a particular operation associated with some or all of the processing procedures and the blocks in the block diagrams described in the present specification.

The computer 2000 according to the present embodiment includes a CPU 2012 and a RAM 2014, and these are connected to one another via a host controller 2010. The computer 2000 also includes a ROM 2026, a flash memory 2024, a communication interface 2022, and an input/output chip 2040. The ROM 2026, the flash memory 2024, the communication interface 2022, and the input/output chip 2040 are connected to the host controller 2010 via an input/output controller 2020.

The CPU 2012 operates according to a program stored in the ROM 2026 and the RAM 2014, and controls each unit accordingly.

The communication interface 2022 communicates with another electronic device via a network. The flash memory 2024 stores a program and data to be used by the CPU 2012 in the computer 2000. The ROM 2026 stores a boot program or the like performed by the computer 2000 upon activation, and/or a program which depends on hardware of the computer 2000. The input/output chip 2040 may also connect various input/output units such as a keyboard, a mouse, and a monitor, to the input/output controller 2020 via input/output ports such as a serial port, a parallel port, a keyboard port, a mouse port, a monitor port, a USB port, a HDMI (registered trademark) port.

A program is provided via a network or a computer readable storage medium such as a CD-ROM, a DVD-ROM, or a memory card. The RAM 2014, the ROM 2026, or the flash memory 2024 is an example of the computer readable storage medium. The program is installed in the flash memory 2024, the RAM 2014, or the ROM 2026, and performed by the CPU 2012. Information processing described in these programs is read by the computer 2000, and brings cooperation between the programs and the above-described various types of hardware resources. A device or a method may be configured by realizing information operation or processing with use of the computer 2000.

For example, when communication between the computer 2000 and an external device is performed, the CPU 2012 may perform a communication program loaded in the RAM 2014, and based on processing described in the communication program, instruct the communication interface 2022 to perform communication processing. Under the control of the CPU 2012, the communication interface 2022 reads transmission data stored in a transmission buffer processing region provided in a recording medium such as the RAM 2014 or the flash memory 2024, transmits the read transmission data to the network, and writes reception data received from the network into a reception buffer processing region or the like provided on the recording medium.

In addition, the CPU 2012 may cause all or a necessary portion of a file or a database stored in a recording medium such as the flash memory 2024 to be read into the RAM 2014, and perform various kinds of processing on the data on the RAM 2014. Next, the CPU 2012 writes back the processed data into the recording medium.

Various types of information such as various types of programs, data, tables, and databases may be stored in the recording medium and may be subjected to information processing. The CPU 2012 may perform, on the data read from the RAM 2014, various kinds of processing including various kinds of operations, information processing, conditional judgement, conditional branching, unconditional branching, information retrieval/replacement, and the like described in the present specification and specified by instruction sequences of the programs, and write back a result into the RAM 2014. Moreover, the CPU 2012 may retrieve information in a file, a database, or the like in a recording medium. For example, when a plurality of entries each of which has an attribute value of a first attribute associated with an attribute value of a second attribute are stored in the recording medium, the CPU 2012 may retrieve an entry designated with the attribute value of the first attribute and matching a condition from the plurality of entries, read the attribute value of the second attribute stored in the entry, and accordingly acquire the attribute value of the second attribute associated with the first attribute satisfying a predetermined condition.

The program and software module described above may be stored in a computer readable storage medium on the computer 2000 or near the computer 2000. It is possible to use a recording medium, such as a hard disk or a RAM, provided in a server system connected to a dedicated communication network or the Internet as the computer readable storage medium. A program stored in the computer readable storage medium may be provided to the computer 2000 via a network.

A program installed in the computer 2000 and causing the computer 2000 to function as the wireless relay device 110 may act on the CPU 2012 or the like and cause the computer 2000 to function as each unit of the wireless relay device 110. Information processing described in these programs functions, by being read by the computer 2000, as each unit of the wireless relay device 110 which is specific means in which software and the above-described various hardware resources cooperate. With these specific means, the wireless relay device 110 specific to an intended use can be constructed by realizing information operation or processing appropriate for the intended use of the computer 2000 of the present embodiment.

A program installed in the computer 2000 and causing the computer 2000 to function as the wireless base station 120 may act on the CPU 2012 or the like and cause the computer 2000 to function as each unit of the wireless base station 120. Information processing described in these programs functions, by being read by the computer 2000, as each unit of the wireless base station 120 which is specific means in which software and the above-described various hardware resources cooperate. With these specific means, the wireless base station 120 specific to an intended use can be constructed by realizing information operation or processing appropriate for the intended use of the computer 2000 of the present embodiment.

Various embodiments have been described with reference to the block diagrams and the like. Each block in the block diagrams may represent (1) a process step in which an operation is performed, or (2) each unit of a device having a role in performing an operation. A particular step and each unit may be implemented by a dedicated circuitry, a programmable circuitry supplied together with a computer-readable instruction stored on a computer readable storage medium, and/or a processor supplied together with a computer-readable instruction stored on a computer readable storage medium. The dedicated circuitry may include a digital and/or analog hardware circuitry, and may include an integrated circuit (IC) and/or a discrete circuitry. The programmable circuitry may include a reconfigurable hardware circuit including logical AND, logical OR, logical XOR, logical NAND, logical NOR, and another logical operation, and a memory element or the like such as a flip-flop, a register, a field programmable gate array (FPGA), a programmable logic array (PLA), or the like.

The computer readable storage medium may include any tangible device capable of storing instructions to be performed by an appropriate device. Thereby, the computer readable storage medium having instructions stored therein forms at least a part of a product including instructions which can be performed to provide means for performing processing procedures or operations specified in the block diagrams. An example of the computer-readable storage medium may include an electronic storage medium, a magnetic storage medium, an optical storage medium, an electromagnetic storage medium, a semiconductor storage medium, etc. A more specific example of the computer-readable storage medium may include a floppy (registered trademark) disk, a diskette, a hard disk, a random-access memory (RAM), a read-only memory (ROM), an erasable programmable read-only memory (EPROM or flash memory), an electrically erasable programmable read-only memory (EEPROM), a static random-access memory (SRAM), a compact disc read-only memory (CD-ROM), a digital versatile disc (DVD), a Blu-ray (registered trademark) disc, a memory stick, or an integrated circuit card.

The computer-readable instructions may include an assembler instruction, an instruction-set-architecture (ISA) instruction, a machine instruction, a machine-dependent instruction, a microcode, a firmware instruction, state-setting data, or either of source code or object code written in any combination of one or more programming languages including an object-oriented programming language such as Smalltalk (registered trademark), JAVA (registered trademark), and C++, or the like, and a conventional procedural programming language such as a "C" programming language or a similar programming language.

The computer-readable instruction may be provided to a general-purpose computer, a special-purpose computer, or a processor or a programmable circuitry of another programmable data processing device locally or via a wide area network (WAN) such as a local area network (LAN) or the Internet, and the computer-readable instruction may be performed in order to bring means which performs an operation designated in the described processing procedure or block diagram.

Examples of the processor include a computer processor, a processing unit, a microprocessor, a digital signal processor, a controller, a microcontroller, and the like.

While the present invention has been described by way of the embodiments, the technical scope of the present invention is not limited to the above-described embodiments. It is apparent to persons skilled in the art that various alterations and improvements can be added to the above-described embodiments. It is also apparent from the scope of the claims that the embodiments added with such alterations or improvements can be included in the technical scope of the present invention.

It should be noted that the operations, procedures, steps, stages, or the like of each process performed by a device, system, program, and method shown in the claims, the specification, or the drawings can be performed in any order as long as the order is not indicated by "prior to," "before," or the like and as long as the output from a previous process is not used in a later process. Even if the operation flow is described using phrases such as "first" or "next" in the claims, specification, or drawings, it does not necessarily mean that the operation must be performed in this order.

### EXPLANATION OF REFERENCES

5: wireless communication system;
100: mobile body;
110: wireless relay device;
120: wireless base station;
140: terminal device;
180: cell;
200: control unit;
210: storage unit;
220: communication unit;
300: control unit;
310: storage unit;
320: communication unit;
2000: computer;
2010: host controller;
2012: CPU;
2014: RAM;
2020: input/output controller;
2022: communication interface;
2024: flash memory;
2026: ROM;
2040: input/output chip.

## Claims

1. A wireless relay device for relaying communication between a terminal device and a base station, comprising:
a communication unit which wirelessly communicates with one or more terminal devices, transmits, to another wireless relay device, load information indicating a communication load of the wireless relay device, and receives load information indicating a communication load of the another wireless relay device; and
a control unit which performs, based on the communication load of the wireless relay device and the communication load of the another wireless relay device, control of switching communication connection destinations of some terminal devices of a plurality of terminal devices communicably connected to the wireless relay device, to the another wireless relay device.

2. The wireless relay device according to claim 1, wherein
when the communication load of the wireless relay device exceeds a predetermined value and the communication load of the another wireless relay device is less than a predetermined value, the control unit performs control of switching the communication connection destinations of the some terminal devices of the plurality of terminal devices to the another wireless relay device.

3. The wireless relay device according to claim 1 or 2, wherein
the control unit decides, based on the communication load of the wireless relay device and the communication load of the another wireless relay device, a number of terminal devices whose communication connection destinations are to be switched to the another wireless relay device, among the plurality of terminal devices.

4. The wireless relay device according to claim 1 or 2, wherein
the communication unit receives information indicating a location of the another wireless relay device, and
the control unit performs, based on the communication load of the wireless relay device, the communication load of the another wireless relay device, a location of the wireless relay device, and the location of the another wireless relay device, control of switching the communication connection destinations of the some terminal devices of the plurality of terminal devices, to the another wireless relay device.

5. The wireless relay device according to claim 1 or 2, wherein
the communication unit receives information indicating a history of a location of the another wireless relay device in a past, and
the control unit performs, based on the communication load of the wireless relay device, the communication load of the another wireless relay device, a history of a location of the wireless relay device in a past, and the history of the location of the another wireless relay device, control of switching the communication connection destinations of the some terminal devices of the plurality of terminal devices to the another wireless relay device.

6. A mobile body comprising the wireless relay device according to claim 1 or 2.

7. A program which causes a computer to function as the wireless relay device according to claim 1 or 2.

8. A wireless base station which communicates with a terminal device via a wireless relay device, comprising:
a communication unit which receives load information indicating a first communication load in a first wireless relay device, and load information indicating a second communication load in a second wireless relay device; and
a control unit which performs, based on the first communication load and the second communication load, control of switching communication connection destinations of some terminal devices of a plurality of terminal devices communicably connected to the first wireless relay device, to the second wireless relay device.

9. The wireless base station according to claim 8, wherein
the communication unit further receives, from the first wireless relay device, first quality information indicating a quality of a radio wave of the second wireless relay device, which is measured in the first wireless relay device, and receives, from the second wireless relay device, second quality information indicating a quality of a radio wave of the first wireless relay device, which is measured in the second wireless relay device, and
the control unit performs, further based on the first quality information and the second quality information, control of switching the communication connection destinations of the some terminal devices of the plurality of terminal devices connected to the first wireless relay device, to the second wireless relay device.

10. The wireless base station according to claim 8 or 9, wherein
the communication unit further receives first location information indicating a location of the first wireless relay device and second location information indicating a location of the second wireless relay device, and
the control unit performs, further based on the first location information and the second location information, control of switching the communication connection destinations of the some terminal devices of the plurality of terminal devices connected to the first wireless relay device, to the second wireless relay device.

11. The wireless base station according to claim 8 or 9, wherein
the communication unit further receives first location history information indicating a history of a location of the first wireless relay device in a past and second location history information indicating a history of a location of the second wireless relay device in a past, and
the control unit performs, further based on the first location history information and the second location history information, control of switching the communication connection destinations of the some terminal devices of the plurality of terminal devices connected to the first wireless relay device, to the second wireless relay device.

12. A wireless communication system comprising:
the wireless base station according to claim 8 or 9; and
the first wireless relay device and the second wireless relay device.

13. A program which causes a computer to function as the wireless base station according to claim 8 or 9.

14. A wireless communication method performed by a wireless relay device which relays communication between a terminal device and a base station, comprising:
wirelessly communicating with one or more terminal devices, transmitting, to another wireless relay device, load information indicating a communication load of the wireless relay device, and receiving load information indicating a communication load of the another wireless relay device; and
performing, based on the communication load of the wireless relay device and the communication load of the another wireless relay device, control of switching communication connection destinations of some terminal devices of a plurality of terminal devices communicably connected to the wireless relay device, to the another wireless relay device.

15. A wireless communication method performed by a wireless base station which communicates with a terminal device via a wireless relay device, comprising:
receiving load information indicating a first communication load in a first wireless relay device and load information indicating a second communication load in a second wireless relay device; and
performing, based on the first communication load and the second communication load, control of switching communication connection destinations of some terminal devices of a plurality of terminal devices communicably connected to the first wireless relay device, to the second wireless relay device.
